# EUROPEAN PATENT SPECIFICATION

(11) **EP 0 461 883 B1**
(45) Date of publication and mention of the grant of the patent: **13.11.1996**
(21) Application number: 91305311.2
(22) Date of filing: 12.06.1991
(51) Int. Cl.: C08F 297/08, C08L 23/12

(54) **Polymer compositions**
Polymerzusammensetzungen
Compositions de polymères

(30) Priority: 13.06.1990 US 538062
(43) Date of publication of application: 18.12.1991
(73) Proprietor: SHELL OIL COMPANY, Houston Texas 77002 (US)
(72) Inventor: McCullough, James Douglas, Jr., Houston, Texas 77079 (US)
(74) Representative: Cresswell, Thomas Anthony

(56) References cited:
- EP-A- 0 170 255
- EP-A- 0 383 099
- DE-A- 2 028 858
- DE-A- 3 034 842
- CHEMICAL ABSTRACTS, vol. 100, no. 8, 2 February 1984, Columbus, Ohio, US; abstract no. 52500R, 'Olefin block copolymers', page 35; & JP-A-58145718
- CHEMICAL ABSTRACTS, vol. 99, no. 18, 31 October 1983, Columbus, Ohio, US; abstract no. 140617A, 'Propylene block copolymers' page 15 ; & JP-A-58071910

## Description

This invention relates to propylene polymer compositions of good impact strength and toughness and also of improved resistance to stress whitening.

Propylene polymer compositions have gained wide commercial acceptance in numerous commercial applications because of their relatively low cost and desirable properties. In general, propylene polymers, particularly propylene homopolymers, have the disadvantage of being brittle with low impact resistance, particularly at low temperatures. Numerous proposals have been made for modifying the properties of propylene homopolymers to improve impact strength and other low temperature properties. Many, if not most, of such proposals have involved the provision of a propylene/α-olefin copolymer portion in otherwise homopolymeric polypropylene. In US-A-J,514,501, there is described a process for the production of block copolymers wherein, for example, a prepolymer which is homopolymeric is produced and a block which has at least one other α-olefin is grown from the prepolymer in a second polymerization step. A second approach to providing improved impact strength comprises mixing a propylene homopolymer with a propylene/ethylene copolymer. Most commercial products of high impact strength result from the production of a first polymer, usually a propylene homopolymer, and the production of a multi-polymeric portion, usually termed a copolymeric portion in the presence of the initial polymer product mixture which still contains active polymerization sites. Whether the resulting product is a block copolymer, a mixture of homopolymer and copolymer or of some other structure is not entirely clear. However, such products are well known in the art, are conventional and have achieved substantial commercial importance. They are often referred to as polypropylene impact copolymers, regardless of their precise structure, and are said to contain a homopolymer phase (often homopolymeric polypropylene) and a rubber phase (the copolymer portion).

Such polypropylene impact copolymers, particularly those wherein ethylene is the other α-olefin of the copolymer portion, do exhibit improved low temperature impact strength and other improved low temperature properties as well as many of the desirable properties of the homopolymer such as stiffness. However, the impact copolymers have low resistance to stress whitening in situations such as rapid impacting or the bending of fabricated parts and also have poor to moderate toughness. In the case of impact copolymers having a high ethylene content in the copolymer phase, brittle failure is often observed upon impact. These high ethylene content polymers do, however, show better resistance to stress whitening.

The difficulty of obtaining a good balance of properties in a polypropylene composition has been addressed on numerous occasions. In EP-A-208,330 there are disclosed compositions said to have improved resistance to stress whitening which comprise homopolymeric polypropylene or peroxide-degraded polypropylene having a grafted ethylene/propylene copolymer portion and, as an additional component, an ester derived from a C₁₂-C₂₀ monocarboxylic acid and a polyhydric alcohol. In JP-A-84020522/04 there is described a mixture of polypropylene of specified melt flow and an ethylene/α-olefin copolymer wherein the molecular weight of the polypropylene has been substantially reduced by treatment with peroxide. US-A-J,562,790 proposes obtaining better properties through the provision of a ternary blend of homopolymers or copolymers and an amorphous copolymer or terpolymer of ethylene, propylene and optionally an unsaturated hydrocarbon of at least one double bond.

In US-A-4,734,459, there are disclosed polypropylene compositions comprising a homopolymer portion and a copolymer portion which comprises crystalline polyethylene and an amorphous ethylene/1-butene copolymer. Care is taken to avoid the presence of propylene in the copolymer portion although provision is made for the presence in the gas phase of a small amount of propylene, e.g less than 5% by mole on the basis of monomers present. Although these compositions do show some improvement in low temperature properties, the crystallinity in the rubber phase would be relatively high for compositions having the higher ethylene contents (in rubber phase) needed for better stress whitening resistance, and the compositions would be expected to be overly brittle. It would be of advantage to provide improved polypropylene compositions having an improved balance of properties including better low temperature properties such as strength and also good resistance to stress whitening.

The present invention provides an impact polymer composition having a melt flow (as determined in accordance with ASTM-1238, Condition L) of 1 to 70 comprising
(a) a homopolymer phase of at least predominately polymeric propylene polymer and
(b) 10 to 60% by weight, based on total polymer composition, of a rubber phase containing, in descending order of proportion, at least 70% by mole of ethylene units, at least 2% by mole of units of an α-olefin of at least 4 carbon atoms, and from 5.1 to 10% by mole of propylene units, all percentages being based on the total rubber phase.

The composition of the invention exhibit an improved balance of properties. These compositions, suitably produced by gas phase processes in a two-stage reaction, are characterized by a homopolymer phase and a copolymer phase of defined proportions. The homopolymer phase is at least predominantly homopolymeric propylene polymer with an optional inclusion of a minor proportion of ethylene units. The copolymer or rubber phase of the compositions of the invention contains primarily ethylene units but also incorporates units of propylene and of an α-olefin of at least 4 carbon atoms.

The compositions of the invention can be produced in the gas phase in the presence of a high activity, stereoregular olefin polymerization catalyst by methods which are broadly conventional. The catalysts are also broadly known, being employed in the polymerization of αolefins of three or more carbon atoms to produce stereoregular polyolefin products. In terms conventionally employed to describe such catalysts, the high activity stereoregular catalysts contain as a first constituent a procatalyst which is a titanium-containing solid, usually a titanium-halide containing solid, and which often contains an electron donor. Suitable electron donors which may be used in the production of the procatalyst are ethers, esters, ketones, phenols, amines, amides, imines, nitriles, phosphines, arsines, stilbenes, phosphoramides or alcoholates. Among the preferred electron donors for use in the production of the procatalyst are phenols and esters, particularly alkyl esters of aromatic carboxylic acids. The use of ethyl benzoate or diisobutyl phthalate is particularly preferred. The second catalyst component, termed a co-catalyst, is an organoaluminum compound which is uncomplexed or is partly or totally complexed with the third catalyst component which is conventionally termed a selectivity control agent. Typical selectivity control agents include esters (particularly aromaticesters), amines (particularly hindered amines), phosphates, phosphites, hindered phenols, silanes (particularly alkoxysilanes) and aryloxysilanes and mixtures of two or more thereof. Alkyl esters of aromatic carboxylic acids such as ethyl p-ethylbenzoate, ethyl p-ethoxybenzoate and diisobutyl phthalate and alkoxysilanes such as propyltrimethoxysilane and diisobutyldimethoxysilane are preferred as the third catalyst component.

Such stereoregular olefin polymerization catalysts are described in numerous patents and other references including US-A-4,728,705. Although various chemical compounds are useful as constituents of the polymerization catalyst, a typical high activity stereoregular olefin polymerization catalyst contains as procatalyst a solid comprising magnesium halide, a titanium halide and the electron donor. The halide moieties of such procatalysts are customarily chloride moieties. The cocatalyst is typically a trialkylaluminum compound such as triethylaluminum or triisobutylaluminum which is often at least partially complexed with the selectivity control agent. Use of the catalysts of this type results in a stereoregular polymeric product when α-olefins of three or more carbon atoms are polymerized. The catalysts are recognised as high activity if they catalyze the production of polymers of desirable properties without the necessity of removing catalyst residues in a de-ashing step.

These catalysts are used in established processes to polymerize or copolymerize α-olefins. The processes may employ a liquid non-polymerizable diluent or alternatively may employ as liquid diluent a monomer of the polymerization. To obtain the compositions of the invention, however, it is desirable to utilize a gas phase process.

Various gas phase processes are known and conventional but one such process which can suitably be used to produce the impact polymer compositions of the invention is described in US-A-4,379,759 and involves a fluidized bed, gas phase reaction. A gas phase process is typically operated by charging to a suitable reactor an amount of preformed polymer particles and a lesser amount of solid catalyst particles. The olefin(s) to be polymerized is (are) passed as a gas through the particle bed under conditions of temperature and pressure and at a rate sufficient to initiate polymerization. Upon passing through the particle bed, the unreacted gas is withdrawn from the reactor and recycled together with make-up feed gas. As catalyst is lost through incorporation of minute amounts of catalyst within the polymer product, additional catalyst is provided to the reactor, often through the use of an inert transport gas such as nitrogen or argon. The reaction temperature is selected to be below the sintering temperature of the catalyst particles and is controlled by an external heat exchanger in a gas cycle loop. Reaction temperatures from 30°C to 120°C may be used, with reaction temperatures from 50°C to 90°C being more commonly used. The reaction pressure is generally up to 6.9 MPa (1000 psi) although reaction pressures from 0.69 to 2.76 MPa (100 to 400 psi) are preferred. The precise control of reaction conditions as well as the addition of catalyst and feed gas and the recycle of unreacted monomer is within the skill of the art. An additional means of reaction and product control is achieved by the provision for the addition of molecular hydrogen to the reactor and thus the reaction system. The addition of molecular hydrogen serves to control the molecular weight of the product, most likely by serving as a chain transfer agent. The use of molecular hydrogen to control the molecular weight of the polymer is also within the skill of the art.

The desired polymeric products are obtained as particulate matter formed by growth of polymer product on the polymer particles provided to the fluidized bed or as particles formed in the reactor. The polymer particles are removed from the reactor at a rate which is substantially equivalent to the rate of polymer production and the particles are passed to a subsequent reaction zone or are finished by conventional methods prior to use.

It is possible although impractical to produce the polypropylene impact copolymers of the invention in a single reactor by control of the feed gas and recycle of unreacted monomer and polymeric product. However, it is more common to operate the gas phase process for production of the compositions of the invention as a two-stage process wherein each stage operates in the gaseous phase in one or more separate reactors. In such a modification, the homopolymeric portion of the impact copolymer is initially produced as described above in a suitable gas phase reactor which generally but not necessarily employs molecular hydrogen to control the molecular weight of the product. This initial homopolymer product containing active catalyst sites is then passed to a second gas phase reactor containing a second fluidized bed. A portion of unreacted monomer from the first reaction stage may be passed to the second stage together with the monomers to be employed in the production of the copolymer phase. The production of the copolymer or rubber phase takes place in the second reaction stage where it may also be desirable to provide molecular hydrogen to control the molecular weight of the copolymer phase. In the two-stage gas phase polymerization process, two or more gas phase homopolymer or copolymer reactors can be used in various sequential or parallel arrangements by engineering procedures known in the art.

The homopolymer phase of the impact polymer compositions of the invention is predominantly but not necessarily entirely homopolymer. To obtain particular properties for polymers used in particular applications it may be desirable to incorporate in the otherwise homopolymer phase of the impact copolymer compositions a small amount, e.g. up to 6% by weight, of a second α-olefin such as ethylene, 1-butene or even a higher α-olefin of up to 6 carbon atoms. The incorporation of an optional small amount of second α-olefin is by conventional methods and serves to modify but not substantially alter the properties of the homopolymer phase. In the embodiments where a small amount of second α-olefin is incorporated the product, although technically a copolymer, is still referred to as the homopolymer phase. The optional second α-olefin is preferably ethylene, preferably incorporated in an amount up to 4% by weight. However, the homopolymer phases which are substantially homopolymeric polypropylene, i.e. phases produced in the substantial absence of second α-olefin, are preferred.

The second phase or rubber phase is a terpolymer phase comprising moieties of ethylene, propylene and a second α-olefin of at least 4 carbon atoms. The ethylene moieties are present in a major amount with moieties of the α-olefin of at least 4 carbon atoms being present in lesser amounts and moieties of propylene present in even smaller amounts. The ethylene content is somewhat critical since impact polymer compositions having too low an ethylene content in the rubber phase lack the needed degree of protection against stress whitening, and too high an ethylene content in the rubber phase results in brittle failure. In the impact copolymers of the invention the ethylene content of the rubber phase is at least 70% suitably 70% to 90%, preferably 80% to 90%, by mole based on total rubber phase. The α-olefin of at least 4 carbon atoms is illustrated by 1-butene, 1-hexene, 1-pentene and 4-methyl-1-pentene. The preferred α-olefin of at least 4 carbon atoms is 1-butene. The proportion of α-olefin of at least 4 carbon atoms which is present in the rubber phase is at least 2%, preferably 5% to 20%, by mole based on total rubber phase. The third component of the rubber phase is propylene which is represent in an amount from 5.1 to 10%, by mole based on total rubber phase. The rubber phase of the impact polymer compositions of the invention can contain small amounts of some other polymerizable monomer including a second α-olefin of at least 4 carbon atoms. In the preferred impact polymer compositions of the invention, however, the rubber phase consists essentially of moieties of ethylene, one α-olefin of at least 4 carbon atoms, preferably 1-butene, and propylene and the total proportion of such moieties is substantially 100%.

The production of the rubber phase of the impact polymer compositions is broadly within the skill of the art. An initial homopolymer phase product containing active polymerization sites is typically passed to a second gas phase reactor where the monomers required to produce the rubber phase are present. Ethylene and an α-olefin of at least 4 carbon atoms are introduced by conventional methods. The product from production of the homopolymer phase will often contain propylene monomer. Depending upon the particular quantity of any propylene monomer present in the homopolymer phase product, the product is partially degassed before introduction to the second reaction stage or is passed directly into the second reactor with additional propylene monomer being added if necessary to provide the desired proportion of propylene in the rubber phase product. It may also be desirable on most occasions to provide molecular hydrogen to the second stage reactor to provide control of the molecular weight of the rubber phase.

The impact polymer compositions of the invention therefore comprise polymers produced by a gas phase process having two phases. The homopolymer phase is predominantly propylene homopolymer, optionally with small amounts of other olefin present. The rubber phase is terpolymeric in character wherein ethylene units are present in major proportions with a lesser proportion of units of α-olefin of at least 4 carbon atoms and an even smaller proportion of propylene units. The rubber phase of the polymers constitutes from 10% to 60%, preferably 10% to 40%, by weight of the total polymer composition. Although the compositions of the invention are literally at least terpolymers, they can appropriately be termed polypropylene impact copolymers because of the generally similar nature of the compositions of the invention to the more conventional propylene/ethylene impact copolymers.

The impact polymer compositions have melt flows, as determined by a conventional test procedure such as ASTM-1238, Condition L, of from 1 to 70. Increase of the melt flow of an olefin polymeric product is frequently accomplished by the use of molecular hydrogen as is also described above. However, an alternative method of lowering the molecular weight of the impact copolymer involves treatment at elevated temperatures, e.g. above 180°C, with peroxide, also termed "visbreaking". In general the use of visbreaking to lower molecular weight results in a lowering of resistance to stress whitening. When the impact polymer compositions of this invention are subjected to peroxide treatment, however, the resistance of the resulting products to stress whitening is comparable to that of non-visbroken conventional impact products. A second desirable property of the impact polymer compositions of the invention is that of gloss. With conventional propylene-ethylene impact copolymers of high ethylene contents like the polymers of the invention, gloss is lost upon visbreaking. The good gloss of the compositions of the invention is, however, retained upon peroxide treatment to lower molecular weight.

The compositions of the invention as well as the peroxide-treated derivatives thereof are characterized by the good impact resistance and other good low temperature properties which are characteristic of conventional polypropylene impact copolymers. However, in contrast with the conventional materials, the compositions of the invention exhibit improved resistance to stress whitening and gloss which is of importance when the composition is employed to produce a final article where outward appearance is important. In addition to generally good tensile properties, the compositions of the invention may exhibit strain hardening, i.e. the tensile strength at break is higher than the tensile strength at yield. This property is particularly desirable when thermoplastic-elastomeric low-to mid-range modulus polymers are desired for applications requiring good resilience, ductility and toughness as exemplified by automotive bumpers and air dams.

The impact polymer compositions of the invention may suitably incorporate a variety of additives such as stabilizers, antioxidants, fillers, colorants, nucleating agents and mold release agents which are conventionally employed in commercial polypropylene compositions. The compositions of the invention are processed by conventional procedures used for thermoplastic materials such as injection molding, extrusion, thermoforming and related processes. Among particular applications for the compositions are the production of molded and extruded automotive parts, small appliance housings, film of improved clarity and gloss and stackable trays and luggage of improved toughness and reduced stress whitening.

The invention is further illustrated by the following Comparative Experiments (not of the invention) and the following Example.

A number of samples of polypropylene impact copolymer, both within and without the scope of the invention, were produced by conventional two stage gas phase processes and evaluated, primarily by conventional procedures. The stress whitening was evaluated by preparing injection molded disks, 6.4 cm (2.5 inches) in diameter and 0.32 cm (0.125 inches) thick, from each sample. A standard Gardner impact apparatus with the ring removed was used to drop a weight upon an impactor, which contacts each disk, from a determined height and measuring the diameter of the whitened spot on the opposite side of the disk. All such determinations were made 24 hours after molding. A 0.91 kg (2 lb) weight was used from heights of 12.3, 25.4 and 37.7 cm (5, 10 and 15 inches) to obtain impacts of 11.52, 23.04 and 34.56 kg-cm (10 in-lb, 20 in-lb and 30 in-lb) respectively. The value reported was an average of 3 determinations.

In certain Runs of the Example the initial impact copolymer composition was visbroken by one of two procedures. In a first procedure, termed "1", a sample of the polymer as powder is heated with 2,5-dimethyl-2,5-bis(t-butylperoxy)hexane in one extrusion pass. In a second procedure, termed "2", the polymer in the form of pellets from an extrusion is treated with the same peroxide during a second extruder pass.

### Comparative Experiment I

To serve as a control, property determinations were conducted on two more conventional polypropylene impact copolymer products having a rubber phase which comprised units derived from ethylene and propylene. No α-olefin of at least 4 carbon atoms was used in preparing the rubber phase. The results of these determinations are shown in Table 1. Test specimens were prepared by injection molding with an Arburg reciprocating screw machine.

**TABLE I**

| Control Run No. | 1 | 2 |
|---|---|---|
| Melt Flow | 3.5 | 4.0 |
| | | |
| Tensile Properties, 0.846 mm/s ( 2 in/min) | | |
| Yield, kPa (psi) | 30795 (4467) | 28472 (4130) |
| Break, kPa (psi) | 16656 (2416) | 19524 (2832) |
| | | |
| % Elongation | | |
| @ Yield | 8.6 | 7.1 |
| @ Break | 108 | 228 |
| | | |
| Izod, Notched, J/cm (ft-lb/in) | | |
| 23°c | 0.45 (0.84) | 0.80 (1.5) |
| 0°C | 0.26 (0.49) | 0.39 (0.73) |
| -20°C | 0.20 (0.38) | 0.36 (0.67) |
| | | |
| Gardner Impact, kg-cm (in-lb), -30°C | 115 (133) | 122 (140) |
| Gloss, @ 60 degree angle | 29.4 | 47.5 |
| | | |
| Stress Whitening, dia, cm (in) | | |
| 11.52 kg-cm (10 in-lb) | 0 (0) | 1.12 (0.44) |
| 23.04 kg/cm (20 in-lb) | 0.20 (0.08) | 1.55 (0.61) |
| 34.52 kg-cm (30 in-lb) | 0.20 (0.08) | 1.70 (0.67) |
| | | |
| C₂ in Homopolymer, %wt | 1.5 | 0 |
| | | |
| %wt Copolymer Phase | 25 | 14.5 |
| | | |
| %wt Ethylene in Copolymer Phase | 95 | 60 |

### Example and Comparative Example II

Property determinations were also made for a number of compositions within the scope of the invention, before and after visbreaking. The results are shown in Tables II-V, wherein the results shown in each Table are for the same polymer before and after visbreaking.

In each instance where applicable, reactor powder was dry mixed with additives, including 1000ppm IRGANOX® 1010, 1000ppm of IRGAFOS ® 168 and 800ppm of calcium stearate. For visbroken compositions the peroxide, 2,5-dimethyl-2,5-bis(t-butylperoxy)hexane, was added as a 50:50 blend with mineral oil. For formulations of the "A" type, the peroxide-oil was dry mixed with the polymer powder and additives. For "B" type formulations, the peroxide-oil was mixed with pellets, the latter having been prepared from one powder-to-pellets extrusion pass.

All extrusions were conducted under nitrogen (bleed to hopper and throat) on a 3.2 cm (1¼ in) Brabender extruder using a mixing screw and an 80 mesh screen. Extruder melt temperatures were maintained at about 240°C. Test specimens were made by injection molding with an Arburg reciprocating screw machine.

The polymers in Tables II, III and V are part of Comparative Example 2. The polymers in table IV are part of the Example.

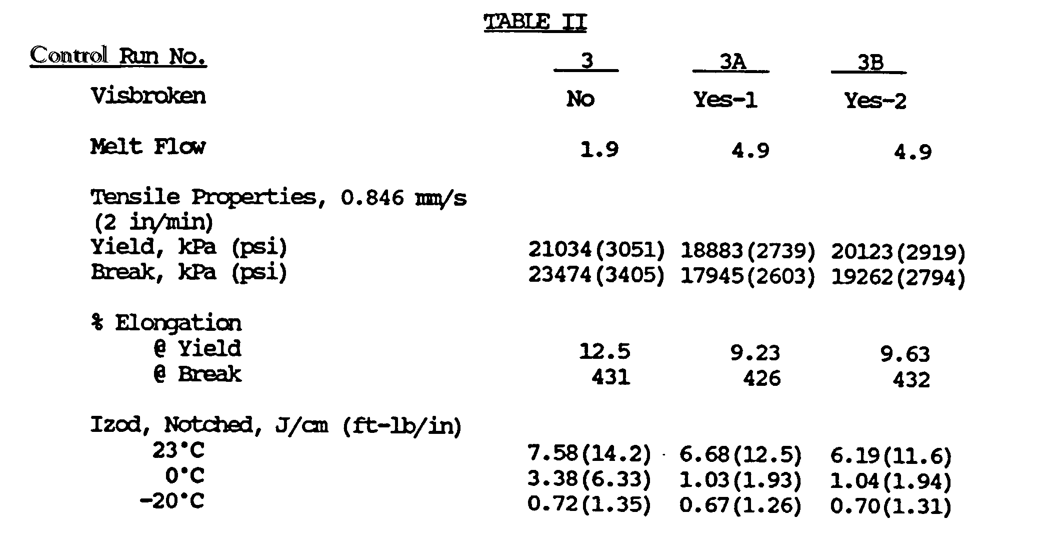

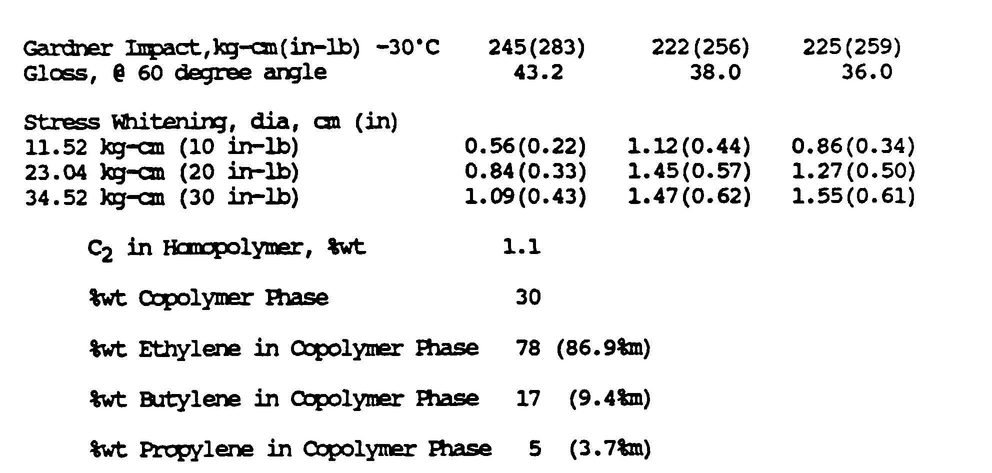

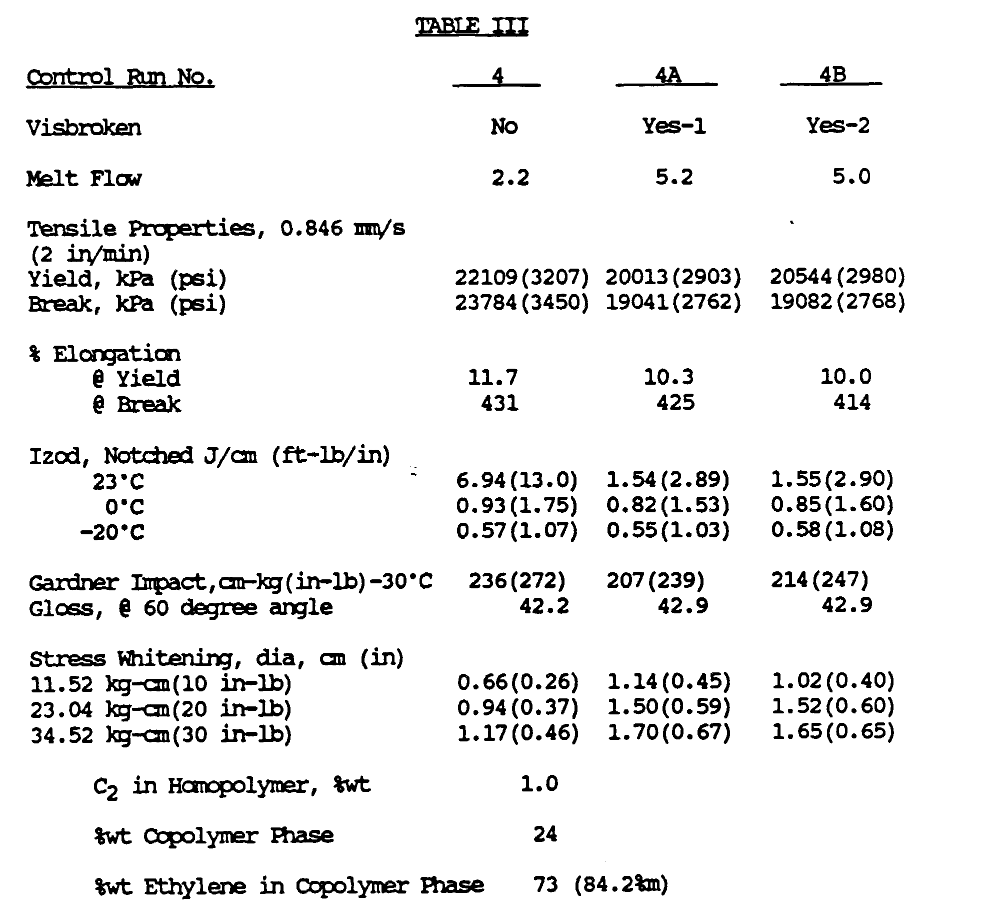

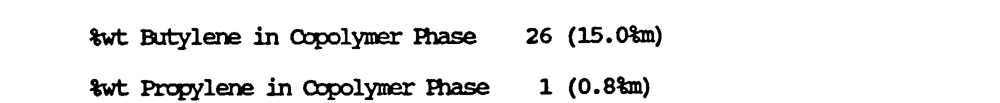

**TABLE IV**

| Run No. | 5 | 5A | 5B |
|---|---|---|---|
| Visbroken | No | Yes-1 | Yes-2 |
| | | | |
| Melt Flow | 1.8 | 5.0 | 5.3 |
| | | | |
| Tensile Properties, 0.846 mm/s (2in/min) | | | |
| Yield, kPa (psi) | 20702(3003) | 19103(2771) | 18641(2704) |
| Break, kPa (psi) | 23150(3358) | 18634(2703) | 18117(2628) |
| | | | |
| % Elongation | | | |
| @ Yield | 12.9 | 10.2 | 9.89 |
| @ Break | 431 | 427 | 431 |
| | | | |
| Izod, Notched, J/cm (ft-lb/in) | | | |
| 23°C | 7.80(14.6) | 7.00(13.1) | 6.73(12.6) |
| 0°C | 1.26(2.36) | 1.05(1.97) | 1.11(2.08) |
| -20°C | 0.70(1.31) | 0.76(1.42) | 0.70(1.31) |
| | | | |
| Gardner Impact, kg-cm(in-lb),-30°C | 254(293) | 225(259) | 215(248) |
| Gloss, @ 60 degree angle | 42.4 | 40.0 | 39.8 |
| | | | |
| Stress Whitening, dia, cm (in) | | | |
| 11.52 kg-cm (10 in-lb) | 0.61(0.24) | 1.19(0.47) | 1.22(0.48) |
| 23.04 kg-cm (20 in-lb) | 0.94(0.37) | 1.47(0.58) | 1.50(0.59) |
| 34.52 kg-cm (30-lb) | 1.14(0.45) | 1.70(0.67) | 1.68(0.66) |
| | | | |
| C₂ in Homopolymer, wt% | 1.2 | | |
| | | | |
| %wt Copolymer Phase | 28 | | |
| | | | |
| %wt Ethylene in Copolymer Phase | 78 (86.6%m) | | |
| | | | |
| %wt Butylene in Copolymer Phase | 15 (8.3%m) | | |
| | | | |
| %wt Propylene in Copolymer Phase | 7 (5.1%m) | | |

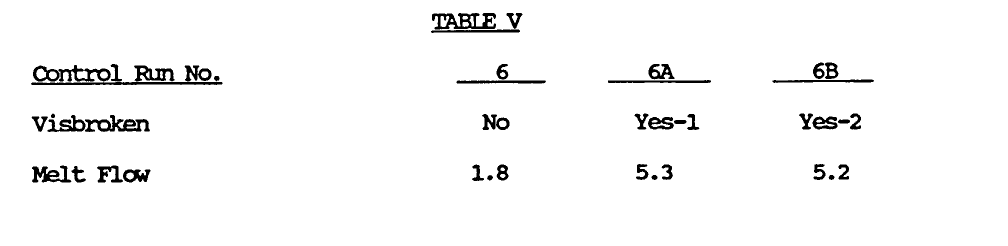

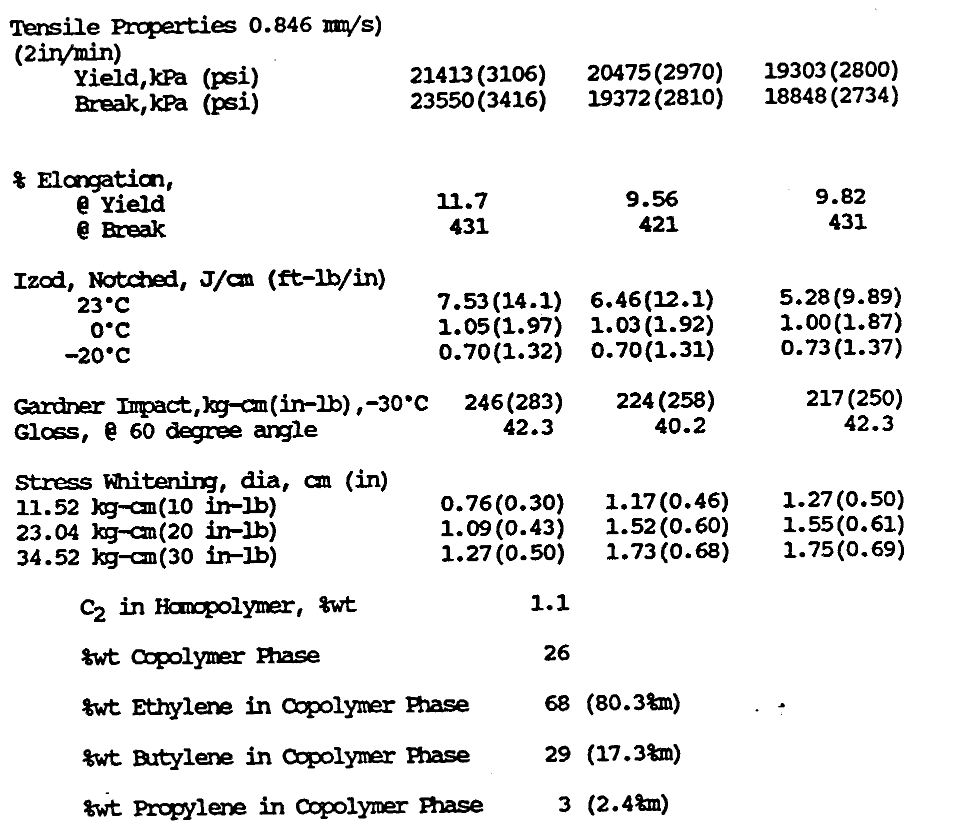

### Comparative Example III

Property determinations were made of a polymer composition which was not within the scope of the present invention because of the absence of 1-butene moieties in the rubber phase. The results are shown in Table VI for this composition before and after visbreaking.

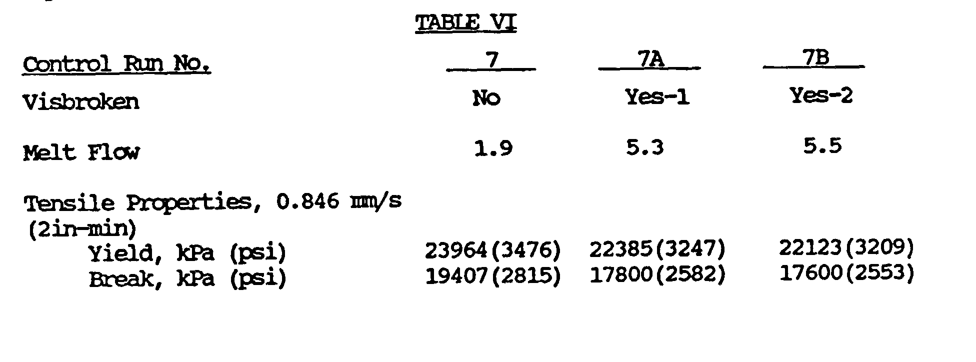

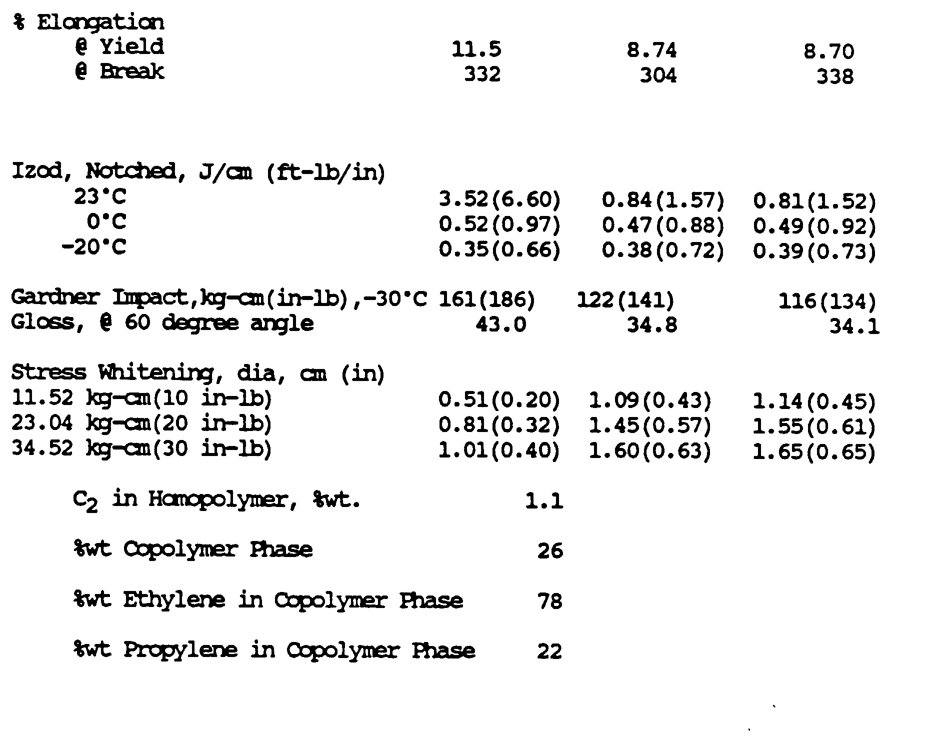

## Claims

1. An impact polymer composition having a melt flow (as determined in accordance with ASTM-1238, Condition L) of 1 to 70 comprising
(a) a homopolymer phase of at least predominately polymeric propylene polymer and
(b) 10 to 60% by weight, based on total polymer composition, of a rubber phase containing, in descending order of proportion, at least 70% by mole of ethylene units, at least 2% by mole of units of an α-olefin of at least 4 carbon atoms and from 5.1 to 10% by mole of propylene units, all percentages being based on the total rubber phase.

2. A composition according to claim 1 wherein the propylene polymer of the homopolymer phase contains up to 6% by weight of an α-olefin of up to 6 carbon atoms other than propylene.

3. A composition according to claim 2 wherein any second α-olefin present in the homopolymer phase is ethylene.

4. A composition according to claim 1, 2 or 3 wherein the rubber phase contains from 80 to 90% by mole of ethylene units based on total rubber phase.

5. A composition according to any one of the preceding claims wherein the α-olefin of at least 4 carbon atoms of the rubber phase is 1-butene.

6. A composition according to claim 5 wherein the rubber phase contains from 5 to 20% by mole of 1-butene units based on total rubber phase.

7. Shaped articles of a composition as claimed in any one of the preceding claims.

## Patentansprüche

1. Schlagfeste Polymermasse mit einer Fließfähigkeit (bestimmt nach ASTM-1238, Bedingung L) von 1 bis 70, umfassend
(a) eine Homopolymerphase aus mindestens überwiegend polymerem Propylenpolymer, und
(b) 10 bis 60 Gew.-%, bezogen auf die gesamte Polymermasse einer Kautschukphase, enthaltend in absteigender Reihenfolge der Menge, mindestens 70 Mol-% Ethyleneinheiten, mindestens 2 Mol-% Einheiten eines α-Olefins mit mindestens 4 Kohlenstoffatomen und 5,1 bis 10 Mol-% Propyleneinheiten, wobei alle Prozentsätze sich auf die gesamte Kautschukphase beziehen.

2. Masse nach Anspruch 1, wobei das Propylenpolymer der Homopolymerphase bis zu 6 Gew.-% eines α-Olefins mit bis zu 6 Kohlenstoffatomen, außer Propylen, enthält.

3. Masse nach Anspruch 2, wobei das gegebenenfalls vorhandene zweite α-Olefin in der Homopolymerphase Ethylen ist.

4. Masse nach Anspruch 1, 2 oder 3, wobei die Kautschukphase 80 bis 90 Mol-% Ethyleneinheiten, bezogen auf die ganze Kautschukphase, enthält.

5. Masse nach einem der vorangehenden Ansprüche, wobei das α-Olefin mit mindestens 4 Kohlenstoffatomen der Kautschukphase 1-Buten ist.

6. Masse nach Anspruch 5, wobei die Kautschukphase 5 bis 20 Mol-% 1-Buten-Einheiten, bezogen auf die gesamte Kautschukphase, enthält.

7. Formkörper aus einer Masse nach einem der vorangehenden Ansprüche.

## Revendications

1. Composition de polymères de qualité choc présentant un indice de fluidité à l'état fondu (déterminé suivant la norme ASTM-1238, Condition L) compris entre 1 et 70, comprenant :
(a) une phase homopolymère constituée au moins principalement par un polymère de propylène polymérique, et
(b) de 10 à 60 % en poids, par rapport à la composition totale de polymères, d'une phase élastomère contenant, par ordre décroissant de proportion, au moins 70 % en moles de motifs éthylène, au moins 2 % en moles de motifs α-oléfine comportant au moins 4 atomes de carbone, et de 5,1 à 10 % en moles de motifs propylène, tous les pourcentages étant donnés par rapport à la phase élastomère totale.

2. Composition conforme à la revendication 1, dans laquelle le polymère de propylène de la phase homopolymère contient jusqu'à 6 % en poids d'une α-oléfine comportant jusqu'à 6 atomes de carbone, autre que le propylène.

3. Composition conforme à la revendication 2, dans laquelle une quelconque seconde α-oléfine présente dans la phase homopolymère est l'éthylène.

4. Composition conforme à la revendication 1, 2 ou 3, dans laquelle la phase élastomère contient de 80 à 90 % en moles de motifs éthylène par rapport à la phase élastomère totale.

5. Composition conforme à l'une quelconque des précédentes revendications, dans laquelle l'α-oléfine comportant au moins 4 atomes de carbone dans la phase élastomère est le 1-butène.

6. Composition conforme à la revendication 5, dans laquelle la phase élastomère contient de 5 à 20 % en moles de motifs 1-butène par rapport à la phase élastomère totale.

7. Articles façonnés avec une composition conforme à l'une quelconque des précédentes revendications.
